(19) Europäisches Patentamt
European Patent Office
Office européen des brevets

(11) EP 4 542 710 A1

(12) **EUROPEAN PATENT APPLICATION**
published in accordance with Art. 153(4) EPC

(43) Date of publication:
**23.04.2025 Bulletin 2025/17**

(21) Application number: **23822997.5**

(22) Date of filing: **07.06.2023**

(51) International Patent Classification (IPC):
***H01M 10/0567*** *(2010.01)* ***H01M 10/0525*** *(2010.01)*
***H01M 4/505*** *(2010.01)* ***H01M 50/491*** *(2021.01)*

(52) Cooperative Patent Classification (CPC):
Y02E 60/10

(86) International application number:
**PCT/CN2023/098809**

(87) International publication number:
**WO 2023/241428 (21.12.2023 Gazette 2023/51)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **16.06.2022 CN 202210679594**

(71) Applicant: **Shenzhen Capchem Technology Co., Ltd**
**Shenzhen, Guangdong 518118 (CN)**

(72) Inventors:
- **QIAN, Yunxian**
  **Shenzhen, Guangdong 518118 (CN)**
- **HU, Shiguang**
  **Shenzhen, Guangdong 518118 (CN)**
- **LI, Hongmei**
  **Shenzhen, Guangdong 518118 (CN)**
- **XIANG, Xiaoxia**
  **Shenzhen, Guangdong 518118 (CN)**

(74) Representative: **Herrero & Asociados, S.L.**
**Edificio Aqua - Agustín de Foxá, 4-10**
**28036 Madrid (ES)**

(54) **LITHIUM ION BATTERY**

(57) To address the issue that the existing lithium ion battery with positive electrode containing manganese impacts battery performance, the application provides a lithium ion battery, which includes a positive electrode, a negative electrode, a non-aqueous electrolyte and a separator, and the separator is positioned between the positive electrode and the negative electrode, the positive electrode includes a positive electrode material layer, the positive electrode material layer includes a lithium manganese-based positive electrode active material, the non-aqueous electrolyte includes a non-aqueous organic solvent, a lithium salt and an additive, and the additive includes a compound represented by structural formula 1:

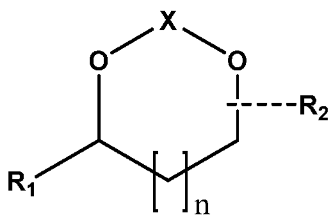

Structural formula 1

the lithium ion battery meets the following requirements:

$$0.1 \leq q*m/p \leq 20;$$

and

$$20 \leq q \leq 60,\ 0.01 \leq m \leq 2,\ 1.5 \leq p \leq 5;$$

The lithium ion battery provided by the invention can significantly reduce the ion exchange between $Mn^{2+}$ and lithium in the negative electrode, prevent manganese from damaging the negative electrode, and increase

EP 4 542 710 A1

the stability of the negative electrode, thereby improving the safety performance of the lithium ion battery while ensuring its high energy density and cycle performance.

## Description

### Technical field

The present application belongs to the technical field of energy storage electronic components, and particularly relates to a lithium ion battery.

### Background

Lithium ion batteries (LIBs) have dominated the portable electronic equipment and electric vehicle markets because of their high operating voltage, low self-discharge, long cycle life, no memory effect, environmental friendliness, and good safety performance. Lithium ion batteries are typically made up of four major components: a positive electrode, a negative electrode, a separator, and an electrolyte, all of which have a direct impact on the battery's performance.

The safety performance of a lithium ion battery can be enhanced by adopting a positive active material containing manganese. However, because manganese in the positive electrode is prone to disproportionation reactions, the generated manganese ions are dissolved in the electrolyte and transfer to the negative electrode, where they undergo ion exchange with lithium, occupying the lithium intercalation position of the negative electrode and making deintercalation difficult, resulting in a decrease in the lithium storage capacity of the negative electrode. Moreover, lithium ions that have deintercalated from ion exchange can no longer engage in the deintercalation process between the positive and negative electrodes, resulting in capacity loss and poor cycle and storage performances of the lithium ion battery. And the influence is more serious at high temperature (above 40°C).

Therefore, it is crucial for enhancing the cycle performance and storage performance of manganese-containing lithium ion batteries that how to inhibit the dissolution of manganese from positive electrode materials and prevent the dissolved manganese from entering the negative electrode.

### Summary of the invention

Aiming at the problem that the existing lithium ion battery containing manganese affects the performance of the battery due to manganese dissolution, the application provides a lithium ion battery.

The technical solutions adopted by the application to address the technical problems are as follows.

The invention provides a lithium ion battery, which includes a positive electrode, a negative electrode, a non-aqueous electrolyte and a separator, and the separator is positioned between the positive electrode and the negative electrode, the positive electrode includes a positive electrode material layer, the positive electrode material layer includes a lithium manganese-based positive electrode active material, the non-aqueous electrolyte includes a non-aqueous organic solvent, a lithium salt and an additive, and the additive includes a compound represented by structural formula 1:

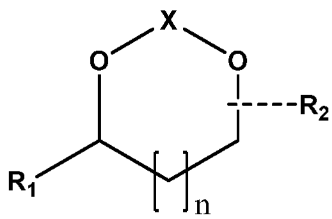

Structural formula 1

wherein n is 0 or 1, X is selected from

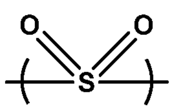 or 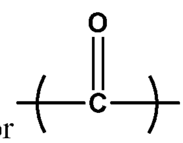,

$R_1$ and $R_2$ are each independently selected from H, a C1-C5 hydrocarbon group,

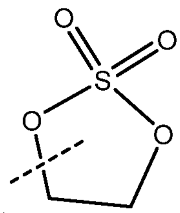, 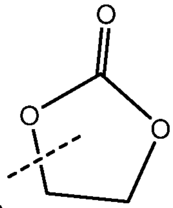 or 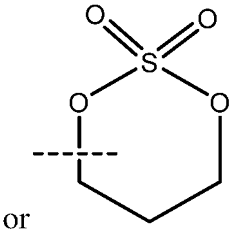,

and at least one of X, $R_1$, and $R_2$ includes a sulfur atom.
the lithium ion battery meets the following requirements:

$$0.1 \leq q*m/p \leq 20;$$

and

$$20 \leq q \leq 60,\ 0.01 \leq m \leq 2,\ 1.5 \leq p \leq 5;$$

where q is a porosity of the separator, and the unit is %;
m is a percentage mass content of the compound represented by structural formula 1 in the non-aqueous electrolyte, and the unit is %; and
P is a capacitance per unit area of the positive electrode material layer, and the unit is $mAh/cm^2$.

Optionally, the lithium ion battery meets the following requirements:

$$1 \leq q*m/p \leq 10.$$

Optionally, the porosity (q) of the separator is 30%-50%.
Optionally, the percentage mass content (m) of the compound represented by structural formula 1 in the non-aqueous electrolyte is 0.1%-1%.
Optionally, the capacitance per unit area (p) of the positive electrode material layer is 2-4 $mAh/cm^2$.
Optionally, the compound represented by structural formula 1 is selected from one or more of the following compounds:

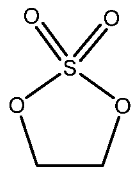
Compound 1

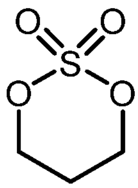
Compound 2

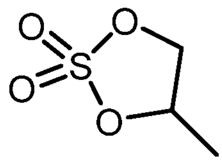
Compound 3

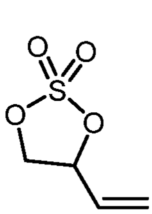
Compound 4

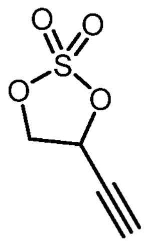
Compound 5

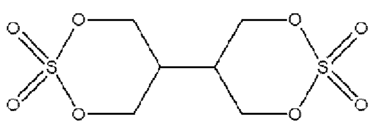
Compound 6

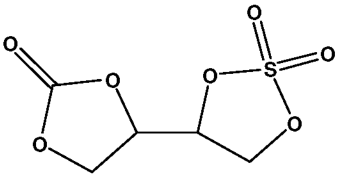

Compound 7

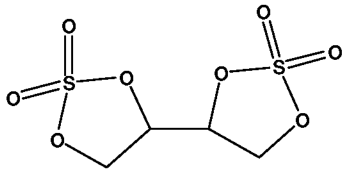

Compound 8

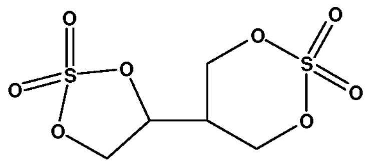

Compound 9

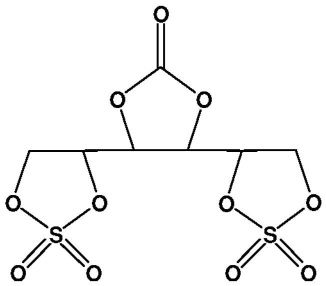

Compound 10

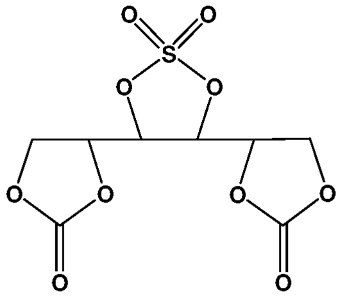

Compound 11

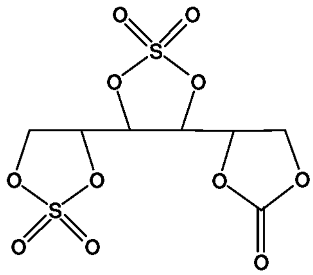

Compound 12

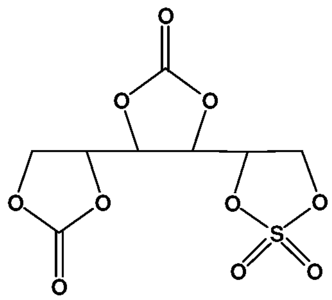

Compound 13

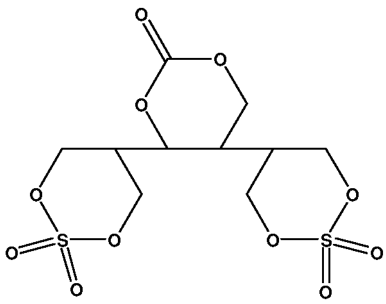

Compound 14

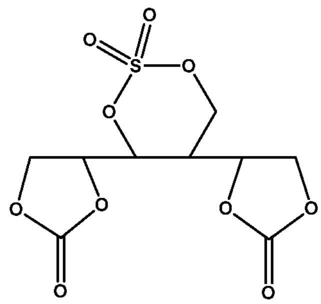

Compound 15

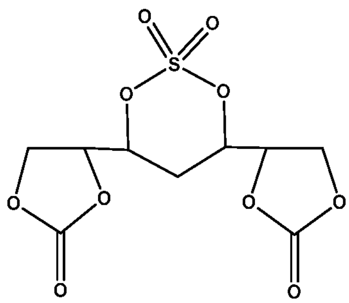

Compound 16

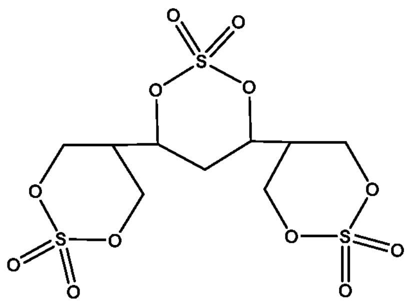

Compound 17 .

Optionally, the lithium manganese-based positive electrode active material includes one or more compounds represented by formula (A), formula (B) and formula (C):

$Li_{1+x}Mn_aNi_bM_{1-a-b}O_{2-y}A_y$ Formula (A)

$Li_{1+}zMn_cN_{2-c}O_{4-d}B_d$ Formula (B)

$LiMn_qFe_{1-q}PO_4$ Formula (C)

in formula (A), $-0.1 \leq x \leq 0.2$, $0<a<1$, $0 \leq b<1$, $0<a+b<1$, $0 \leq y<0.2$, M is one or more of Co, Fe, Cr, Ti, Zn, V, Al, Zr and Ce, and A includes one or more of S, N, F, Cl, Br and I;

in formula (B), $-0.1 \leq z \leq 0.2$, $0<c\leq 2$, $0\leq d<1$, N includes one or more of Ni, Fe, Cr, Ti, Zn, V, Al, Mg, Zr and Ce, and B includes one or more of S, N, F, Cl, Br and P; and
in formula (C), $0<q<1$.

Optionally, at least one surface of the separator is coated with a surface coating, and the surface coating includes one or more of an inorganic particle and an organic gel.
Optionally, a content of manganese in the separator per unit area is 50 ppm/m$^2$-2000 ppm/m$^2$.
Optionally, the additive further includes at least one of cyclic carbonate compound, unsaturated phosphate compound, borate compound and nitrile compound.
Preferably, the content of the additive is 0.01%-30% based on the total mass of the non-aqueous electrolyte being 100%.
Preferably, the cyclic carbonate compound is selected from at least one of vinylene carbonate, vinylethylene carbonate, fluoroethylene carbonate or a compound represented by structural formula 2;

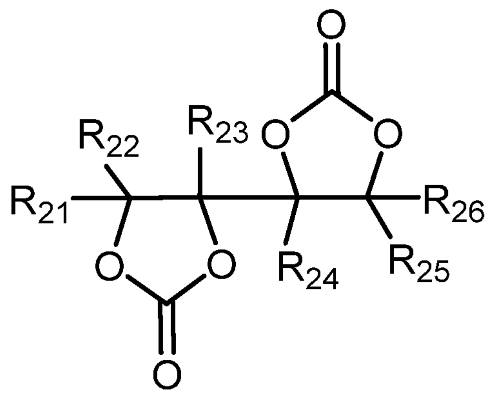

Structural formula 2

in structural formula 2, $R_{21}$, $R_{22}$, $R_{23}$, $R_{24}$, $R_{25}$ and $R_{26}$ are each independently selected from one of a hydrogen atom, a halogen atom and a C1-C5 group;
the unsaturated phosphate compound is selected from at least one of the compounds represented by structural formula 3:

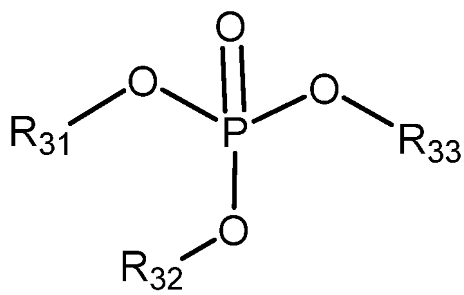

Structural formula 3

in structural formula 3, $R_{31}$, $R_{32}$ and $R_{33}$ are each independently selected from a C1-C5 saturated hydrocarbon group, an unsaturated hydrocarbon group, a halogenated hydrocarbon group and $-Si(C_mH_{2m+1})_3$, m is a natural number of 1-3, and at least one of $R_{31}$, $R_{32}$ and $R_{33}$ is an unsaturated hydrocarbon group.
the borate compound is selected from at least one of tris (trimethylsilane) borate and tris (triethyl silicane) borate; and the nitrile compound is selected from one or more of butanedinitrile, glutaronitrile, ethylene glycol bis (propionitrile) ether, hexanetricarbonitrile, adiponitrile, pimelic dinitrile, hexamethylene dicyanide, azelaic dinitrile and sebaconitrile.

According to the lithium ion battery provided by the present application, the lithium manganese-based positive electrode active material is adopted in the positive electrode material layer. The lithium manganese-based positive electrode active material has good structural stability, can withstand high impact forces, and lessens the issue of thermal runaway caused by material structural damage. Additionally, the oxidation effect of electrolyte on the surface of the positive

electrode active material is lower, which can lessen electrolyte side reactions on the surface of the positive electrode active material, inhibit gas generation, and reduce heat generation, all of which improve the safety performance of the lithium ion battery. In order to prevent the issue of manganese ion dissolution, the separator was carefully selected, and the compound represented by structural formula 1 was added to the non-aqueous electrolyte. The inventors conducted extensive research and discovered that when the porosity (q) of the separator, the percentage mass content (m) of the compound represented by structural formula 1 in the non-aqueous electrolyte and the capacitance per unit area (p) of the positive electrode material layer meet the requirement of $0.1 \le q*m/p \le 20$, it can give full play to the synergistic effect among the separator, the compound represented by structural formula 1 in non-aqueous electrolyte, the lithium manganese-based positive electrode active material and the capacitance of the positive material layer. This allows for the creation of a compact interface film with a more optimized structure and composition at the positive electrode interface. This will inhibit $Mn^{2+}$ transfer between the positive and negative electrodes, reduce the ion exchange between $Mn^{2+}$ and lithium in the negative electrode, prevent manganese from damaging the negative electrode, and improve the stability of the negative electrode, all of which will improve the safety performance of the lithium ion battery while ensuring its high energy density and cycle performance.

**Detailed description of disclosed embodiments**

In order to make the technical problems, technical solutions and beneficial effects of the present application more clear, the application will be further explained in detail below with reference to the embodiments. It should be understood that the specific embodiments described here are only used to illustrate the application, rather than to limit the application.

The embodiment of the application provides a lithium ion battery, which includes a positive electrode, a negative electrode, a non-aqueous electrolyte and a separator, and the separator is positioned between the positive electrode and the negative electrode, the positive electrode includes a positive electrode material layer, the positive electrode material layer includes a lithium manganese-based positive electrode active material, the non-aqueous electrolyte includes a non-aqueous organic solvent, a lithium salt and an additive, and the additive includes a compound represented by structural formula 1:

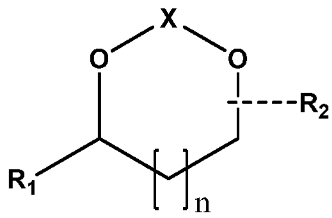

Structural formula 1

wherein n is 0 or 1, X is selected from

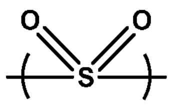 or 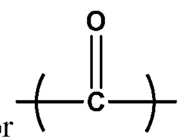,

$R_1$ and $R_2$ are each independently selected from H, a C1-C5 hydrocarbon group,

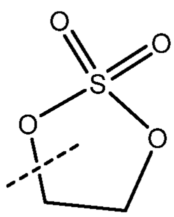, 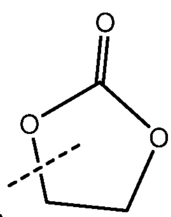 or 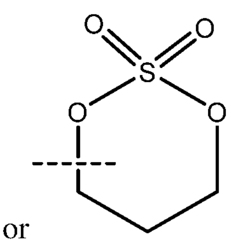,

and at least one of X, $R_1$, and $R_2$ includes a sulfur atom.

the lithium ion battery meets the following requirements:

$$0.1 \leq q*m/p \leq 20;$$

and

$$20 \leq q \leq 60,\ 0.01 \leq m \leq 2,\ 1.5 \leq p \leq 5;$$

where q is a porosity of the separator, and the unit is %;
m is a percentage mass content of the compound represented by structural formula 1 in the non-aqueous electrolyte, and the unit is %; and
P is a capacitance per unit area of the positive electrode material layer, and the unit is mAh/cm$^2$.

According to the lithium ion battery provided by the present application, the lithium manganese-based positive electrode active material is adopted in the positive electrode material layer. The lithium manganese-based positive electrode active material has good structural stability, can withstand high impact forces, and lessens the issue of thermal runaway caused by material structural damage. Additionally, the oxidation effect of electrolyte on the surface of the positive electrode active material is lower, which can lessen electrolyte side reactions on the surface of the positive electrode active material, inhibit gas generation, and reduce heat generation, all of which improve the safety performance of the lithium ion battery. In order to prevent the issue of manganese ion dissolution, the separator was carefully selected, and the compound represented by structural formula 1 was added to the non-aqueous electrolyte. The inventors conducted extensive research and discovered that when the porosity (q) of the separator, the percentage mass content (m) of the compound represented by structural formula 1 in the non-aqueous electrolyte and the capacitance per unit area (p) of the positive electrode material layer meet the requirement of $0.1 \leq q*m/p \leq 20$, it can give full play to the synergistic effect among the separator, the compound represented by structural formula 1 in non-aqueous electrolyte, the lithium manganese-based positive electrode active material and the capacitance of the positive material layer. This allows for the creation of a compact interface film with a more optimized structure and composition at the positive electrode interface. This will inhibit $Mn^{2+}$ transfer between the positive and negative electrodes, reduce the ion exchange between $Mn^{2+}$ and lithium in the negative electrode, prevent manganese from damaging the negative electrode, and improve the stability of the negative electrode, all of which will improve the safety performance of the lithium ion battery while ensuring its high energy density and cycle performance.

In the description of the present application, the C1-C5 hydrocarbon group includes but is not limited to methyl, ethyl, n-propyl, isopropyl, n-butyl, isobutyl, sec-butyl, tert-butyl, n-pentyl, isopentyl, sec-pentyl, neopentyl, vinyl, propenyl, allyl, 2-butenyl, 1-butenyl, ethynyl, propenyl, propargyl, propargyl, 2-butynyl or 1-butynyl.

In some embodiments, when n is 0, the compound represented by structural formula 1 is:

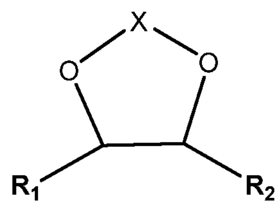;

X is selected from

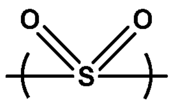 or 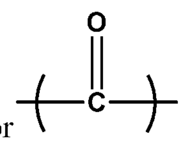,

$R_1$ and $R_2$ are each independently selected from H, a C1-C5 hydrocarbon group,

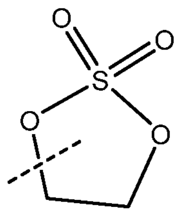,
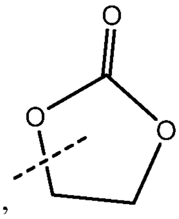 or
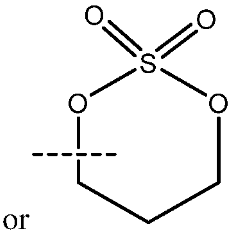,

and at least one of X, $R_1$ and $R_2$ includes a sulfur atom.

In some embodiments, when n is 1, the compound represented by structural formula 1 is:

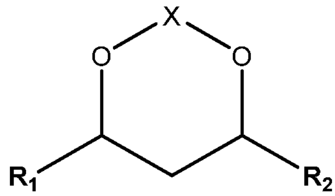 or
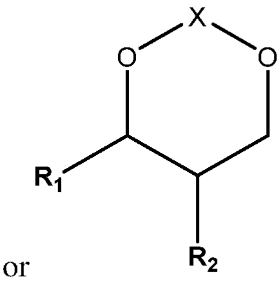;

X is selected from

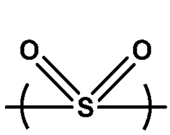 or
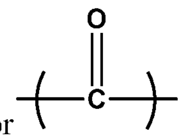,

$R_1$ and $R_2$ are each independently selected from H, a C1-C5 hydrocarbon group,

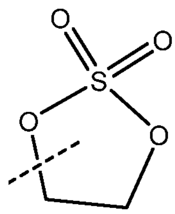,
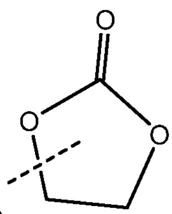 or
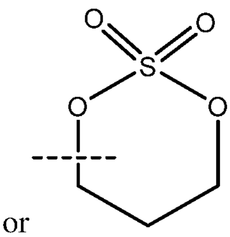,

and at least one of X, $R_1$ and $R_2$ includes a sulfur atom.

In a preferred embodiment, the lithium ion battery meets the following requirements:

$$1 \leq q*m/p \leq 10.$$

The effects of the separator, the non-aqueous electrolyte, and the positive electrode on the dissolution of manganese ions in the battery and the intercalation of manganese ions in the negative electrode can be optimized by correlating the porosity (q) of the separator, the percentage mass content (m) of the compound represented by structural formula 1 in the non-aqueous electrolyte and the capacitance per unit area (p) of the positive electrode material layer. This will produce a lithium ion battery with a high energy density and exceptional high-temperature cycle performance.

In a specific embodiment, the porosity (q) of the separator may be 20%, 25%, 30%, 35%, 40%, 45%, 50%, 55% or 60%.

In a preferred embodiment, the porosity (q) of the separator is 30%-50%.

As a barrier material between the positive electrode and the negative electrode, the separator can avoid the direct contact short circuit between the positive electrode and the negative electrode but allow lithium ions to pass through. Meanwhile, the micropores on the separator are also the transfer channels for manganese ions to enter the negative electrode. By controlling the porosity (q) of the separator within the above range, it is beneficial to inhibit the mobility of

manganese ions between the positive electrode and the negative electrode. If the separator's porosity is too low, the efficiency of lithium ion transfer between positive electrode and positive electrode will suffer, reducing the dynamic performance of the lithium ion battery and increasing the battery impedance. If the porosity of the separator is too high, t it will be unable to effectively prevent manganese ions dissolved in the positive active material from entering the negative active material, which will obviously increase the ion exchange between manganese ions and lithium in the negative electrode, and fails to effectively inhibit the damage of manganese to the negative electrode. In severe circumstances, the positive and negative electrodes will directly contact with each other or be easily pierced by lithium dendrites, resulting in short circuit.

The porosity (q) of the separator can be measured by the following method。

Porosity is the ratio of pore volume to separator volume. Soaked the weighed separator ($W_d$) in n-butanol for a certain period of time (e.g., 2h), then pulled it out, gently sucked the liquid from its surface with filter paper, and then weighed it ($W_w$) to determine the mass of n-butanol absorbed in the separator, i.e., $W_b$=$W_w$-$W_d$. To calculate the pore volume of the separator, divide the mass (($W_b$) by the density ($\rho_b$) of n-butanol, and the ratio of this volume to the dry film volume ($V_p$) is the porosity of the separator, i.e., q%= ($W_w$-$W_d$)/($\rho_b \cdot V_p$).

In specific embodiments, the percentage mass content (m) of the compound represented by structural formula 1 in the non-aqueous electrolyte may be 0.01%, 0.03%, 0.05%, 0.1%, 0.12%, 0.15%, 0.3%, 0.5%, 0.8%, 0.9%, 1.0%, 1.2%, 1.4%, 1.7%, 1.9% or 2%.

In a preferred embodiment, the percentage mass content (m) of the compound represented by structural formula 1 in the non-aqueous electrolyte is 0.1%-1%.

The compound represented by structural formula 1 decomposes on the surface of the positive electrode material layer and participates in the formation of a passivation film on the surface of the positive electrode material layer. The passivation film has a certain inhibitory effect on the dissolution of manganese ions. If the content of the compound represented by structural formula 1 is too low in the non-aqueous electrolyte, it will affect the formation quality of the passivation film on the surface of the lithium manganese-based positive electrode active material, thus it is difficult to effectively inhibit the dissolution of manganese ions. If the content of the compound represented by structural formula 1 is too high in the non-aqueous electrolyte, a strong film-forming reaction will occur on the surface of the lithium manganese-based positive electrode active material, causing the interface film to be too thick, increasing the interface impedance and negatively affecting battery performance.

In a specific embodiment, the capacitance per unit area (p) of the positive electrode material layer may be 1.5 $mAh/cm^2$, 1.8 $mAh/cm^2$, 2 $mAh/cm^2$, 2.2 $mAh/cm^2$, 2.5 $mAh/cm^2$, 2.8 $mAh/cm^2$, 3.0 $mAh/cm^2$, 3.2 $mAh/cm^2$, 3.5 $mAh/cm^2$, 3.8 $mAh/cm^2$, 4.0 $mAh/cm^2$, 4.2 $mAh/cm^2$, 4.5 $mAh/cm^2$, 4.8 $mAh/cm^2$ or 5.0 $mAh/cm^2$.

In a preferred embodiment, the capacitance per unit area (p) of the positive electrode material layer is 2-4 $mAh/cm^2$.

In a more preferred embodiment, the capacitance per unit area (p) of the positive electrode material layer is 2.5-4 $mAh/cm^2$.

The capacitance per unit area of the positive electrode material layer represents the total amount of active ions that can be released per unit area of the positive electrode material layer when the battery is fully discharged. The battery capacity is designed to be the same. With the same discharge rate, if the capacity per unit area of the positive electrode material layer is larger, the amount of active ions per unit area that instantaneously leaves the surface of the positive electrode material layer is larger. There is a certain correlation between manganese in lithium manganese-based positive electrode active material and the capacitance per unit area of the positive electrode material layer. The battery's cycle performance degrades when the manganese content in the lithium manganese-based positive electrode active material decreases. However, the larger the capacitance per unit area of the positive electrode material layer, the more active ions would be deintercalated from the positive electrode of the lithium manganese-based positive electrode active material with a smaller area. On the contrary, the higher the energy density of the battery, the lower the energy density of the battery. This is not conducive to commercial application.

The capacitance per unit area (p) of the positive electrode material layer can be measured by the following methods.

Step 1): Test of the average discharge capacity of the positive electrode material layer. Obtained a small disc of the positive electrode material layer using punching die. The lithium metal sheet was used as the electrode, the Celgard membrane was used as the isolation membrane, and the solution of EC+EMC+DEC (ethylene carbonate, ethyl methyl carbonate and diethyl carbonate in the volume ratio of 1:1:1) in which $LiPF_6$ (1mol/L) was dissolved was used as the electrolyte. Five identical CR2430 button batteries were assembled in an argon-protected glove box. After assembling the battery, allowed it to stand for 12h before charging it with constant current at 0.1C until the voltage reached the upper limit of cut-off voltage (such as 4.5V), then discharged it with constant current at 0.1C until the voltage reached the lower limit of cut-off voltage (such as 3.0V), and recorded the discharge capacity of the first cycle. The average discharge capacity of the 5 button cells is the average discharge capacity of the positive active layer.

Step 2): The average discharge capacity of the positive electrode material layer is adopted, which was

determined by the "Test of the average discharge capacity of the positive electrode material layer" in Step 1. The diameter d of the small positive disc of the button cell was measured with a caliper, and then the area of the small positive disc of the button cell was calculated according to the formula $\pi$*(0 .5*d)$^2$.

Step 3) The capacitance per unit area (p) of the positive electrode material layer was calculated according to the following formula: Capacitance per unit area (p) of the positive electrode material layer = Average discharge capacity of the positive electrode material layer (mAh) / Area of the small disc of positive electrode (cm$^2$).

It should be noted that the above analysis is based on the influence of each parameter on the performance of lithium ion batteries; however, in practice, the above parameters are interrelated and inseparable in terms of inhibiting the dissolution of positive manganese ions and protecting the negative electrode. For example, the content of manganese ions in the positive electrode material layer is controlled by controlling the capacitance per unit area of the positive electrode material layer; meanwhile, by optimizing the porosity of the separator, the diffusion rate of manganese ions in the separator is lower under the condition of ensuring the smooth passage of lithium ions. This lowers the ion exchange effect of manganese ions passing through the separator and lithium in the negative electrode, inhibiting the damage of manganese to the negative electrode and improving the stability of the negative electrode. At the same time, the non-aqueous electrolyte contains the compound represented by structural formula 1, which can form a dense passivation film at the interface of the positive electrode material layer, stabilize the positive electrode structure, reduce the dissolution of manganese ions, and thus reduce the oxidative decomposition of the electrolyte at the interface of the positive electrode. The three can cooperate with one another with the relationship $0.1 \leq q*m/p \leq 20$ to achieve a better promotion effect.

In some embodiments, the compound represented by structural formula 1 is selected from one or more of the following compounds:

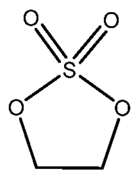

Compound 1

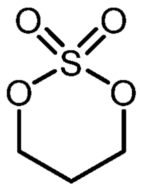

Compound 2

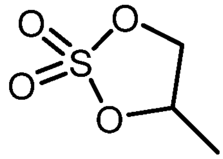

Compound 3

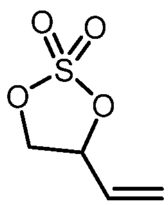

Compound 4

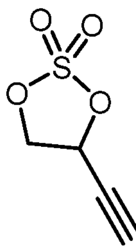

Compound 5

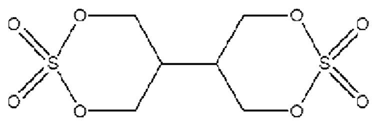

Compound 6

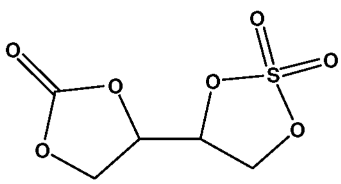

Compound 7

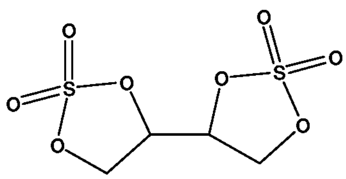

Compound 8

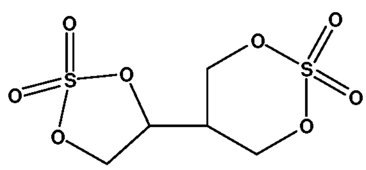

Compound 9

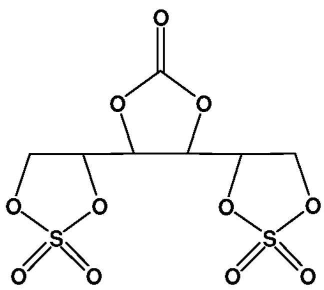

Compound 10

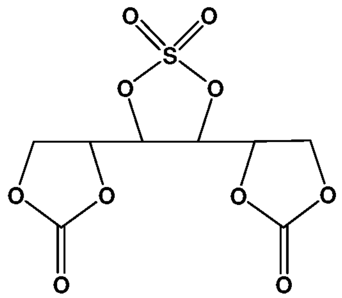

Compound 11

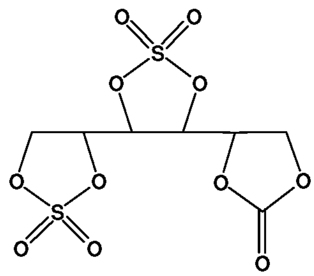

Compound 12

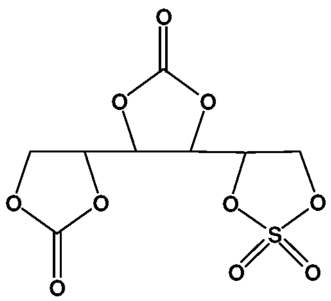

Compound 13

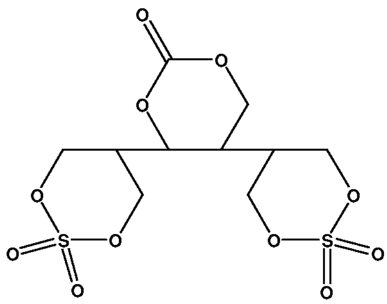

Compound 14

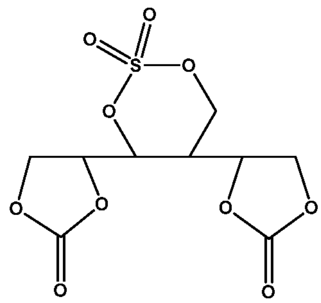

Compound 15

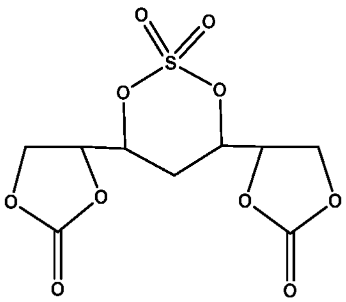

Compound 16

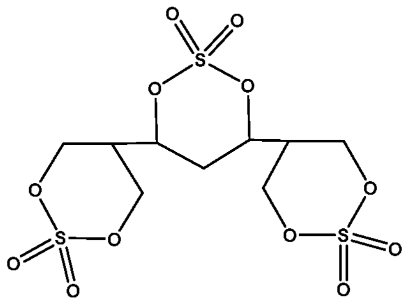

Compound 17.

It should be noted that the above are merely the preferred compounds of the present application, not the limitation of the present application.

With the structural formula of the compound represented by structural formula 1, a person skilled in the art may obtain the preparation methods of the above compounds according to the common knowledge in the chemical synthesis field. For example, compound 11 may be prepared by the following method.

Put organic solvents such as sorbitol, dimethyl carbonate, methanol alkaline catalyst potassium hydroxide and DMF into a reaction container, allow them to react for several hours under heating conditions, add a certain amount of oxalic acid to adjust the pH value to be neutral, then filter and recrystallize to obtain an intermediate product 1, and then perform esterification reaction on the intermediate product 1, carbonate, thionyl chloride and the like under high temperature conditions to obtain an intermediate product 2, and oxidize the intermediate product 2 by using an oxidant such as sodium periodate and the like to obtain a compound 11.

In some embodiments, the lithium manganese-based positive electrode active material includes one or more compounds represented by formula (A), formula (A) and formula (C):

$Li_{1+x}Mn_aNi_bM_{1-a-b}O_{2-y}A_y$ Formula (A)

$Li_{1+}zMn_cN_{2-c}O_{4-d}B_d$ Formula (B)

$LiMn_qFe_{1-q}PO_4$ Formula (C)

in formula (A), $-0.1 \le x \le 0.2$, $0<a<1$, $0 \le b<1$, $0<a+b<1$, $0 \le y<0.2$, M is one or more of Co, Fe, Cr, Ti, Zn, V, Al, Zr and Ce, and A includes one or more of S, N, F, Cl, Br and I;
in formula (B), $-0.1 \le z \le 0.2$, $0<c \le 2$, $0 \le d<1$, N includes one or more of Ni, Fe, Cr, Ti, Zn, V, Al, Mg, Zr and Ce, and B includes one or more of S, N, F, Cl, Br and P; and
in formula (C), $0<q<1$.

In a preferred embodiment, in formula (A), $0.5 \le b<1$. Furthermore, in formula (A), $0.5 \le b<1$, M is one or two of Co and Al, and A is one or two of S and F.

In a preferred embodiment, in formula (B), $1 \le c \le 2$. Further, in formula (B), $1 \le c \le 2$, N is one or two of Ni and Al, and A is one or two of F and P.

In a preferred embodiment, in formula (C), $0.3 \le q \le 0.8$.

In some embodiments, the positive electrode material layer further includes a positive electrode binder and a positive electrode conductive agent. The lithium manganese-based positive electrode active material, the positive electrode binder and the positive electrode conductive agent are blended to obtain the positive electrode material layer.

The percentage mass content of the positive electrode binder is 1-2%, and the percentage mass content of the positive electrode conductive agent is 0.5-2%, based on the total mass of the positive electrode material layer being 100%.

The positive electrode binder includes one or more of polyvinylidene fluoride, vinylidene fluoride copolymer, polytetrafluoroethylene, vinylidene fluoride-hexafluoropropylene copolymer, tetrafluoroethylene-hexafluoropropylene copolymer, tetrafluoroethylene-perfluoroalkyl vinyl ether copolymer, ethylene-tetrafluoroethylene copolymer, vinylidene fluoride-tetrafluoroethylene copolymer, vinylidene fluoride-trifluoroethylene copolymer, vinylidene fluoride-trichloroethylene copolymer, vinylidene fluoride-fluoroethylene copolymer, vinylidene fluoride-hexafluoropropylene-tetrafluoroethylene copolymer, and thermoplastic resins such as thermoplastic polyimide, polyethylene and polypropylene, as well as acrylic resin, carboxymethyl cellulose sodium, polyvinyl butyral, ethylene-vinyl acetate copolymer, polyvinyl alcohol and styrene butadiene rubber.

The positive electrode conductive agent includes one or more of conductive carbon black, conductive carbon spheres, conductive graphite, conductive carbon fiber, carbon nanotubes, graphene or reduced graphene oxide.

In some embodiments, the positive electrode further includes an positive electrode current collector, and the positive electrode material layer is formed on the surface of the positive electrode current collector.

The positive electrode current collector is selected from metal materials that can conduct electrons. Preferably, the positive electrode current collector includes one or more of Al, Ni, tin, copper and stainless steel. In a more preferred embodiment, the positive electrode current collector is selected from aluminum foil.

In some embodiments, the separator may be a polymer membrane, a nonwoven fabric, etc., including but not limited to single-layer PP (polypropylene), single-layer PE (polyethylene), double-layer PP/PE, double-layer PP/PP and triple-layer PP/PE/PP membranes.

In some embodiments, at least one side surface of the separator is coated with a surface coating, and the surface coating includes one or more of an inorganic particle and an organic gel.

With the surface coating, the mechanical strength and anti-acupuncture ability of the separator can be effectively improved, and the safety performance of the lithium ion battery can be further improved.

In some embodiments, the content of manganese in the separator per unit area is 50 ppm/$m^2$-2000 ppm/$m^2$.

In some embodiments, the non-aqueous organic solvent includes one or more of ether solvent, nitrile solvent, carbonate solvent and carboxylic ester solvent.

In some embodiments, the ether solvent includes cyclic ether or chain ether, preferably chain ether with 3-10 carbon atoms and cyclic ether with 3-6 carbon atoms, and the specific cyclic ether may be but are not limited to 1,3-dioxolane (DOL), 1,4-dioxooxane (DX), crown ether, tetrahydrofuran (THF), 2-methyltetrahydrofuran (2-$CH_3$-THF) and 2-trifluoromethyltetrahydrofuran (2-$CF_3$-THF). Specifically, the chain ether may be but not limited to dimethoxymethane, diethoxymethane, ethoxymethoxymethane, ethylene glycol di-n-propyl ether, ethylene glycol di-n-butyl ether and diethylene glycol dimethyl ether. Dimethoxymethane, diethoxymethane and ethoxymethoxymethane with low viscosity and high ionic conductivity are particularly preferred because the solvability of chain ether and lithium ions is high and the ion dissociation can be improved. Ether compounds may be used alone or in any combinations and ratios of two or more kinds. The addition amount of ether compound is not particularly limited, which is within the range of not significantly damaging the effect of the high-voltage lithium ion battery of the present application. In the non-aqueous solvent volume ratio of 100%, the volume ratio is usually 1% or more, preferably 2% or more, more preferably 3% or more. Moreover, the volume ratio is usually 30% or less, preferably 25% or less, and more preferably 20% or less. When two or more ether compounds are used in combination, the total amount of ether compounds only needs to be in the above range. When the addition amount of ether compounds is within the above preferred range, it is easy to ensure the improvement effects of ionic conductivity brought by the increase of lithium ion dissociation degree and the decrease of viscosity of chain ether. In addition, when the negative electrode active material is a carbon material, the co-intercalation reaction of the chain ether and lithium ions can be suppressed, so that the input-output characteristics and the charge-discharge rate characteristics

can be within an appropriate range.

In some embodiments, the nitrile solvent may be, but is not limited to, one or more of acetonitrile, glutaronitrile and malononitrile.

In some embodiments, the carbonate solvent includes a cyclic carbonate or a chain carbonate. The cyclic carbonate may be but not limited to one or more of ethylene carbonate (EC), propene carbonate (PC), γ-butyrolactone (GBL) and butylene carbonate (BC). The chain carbonate may be but not limited to one or more of dimethyl carbonate (DMC), ethyl methyl carbonate (EMC), diethyl carbonate (DEC) and dipropyl carbonate (DPC). The content of cyclic carbonate is not particularly limited, which is within the range of not significantly damaging the effect of the high-voltage lithium ion battery of the present application. However, in the case where one is used alone, the minimal content is usually 3% by volume or more, preferably 5% by volume or more, relative to the total amount of the solvent in the non-aqueous electrolyte. With this range, the decrease of conductivity caused by the decrease of the dielectric constant of the non-aqueous electrolyte can be avoided, so the high-current discharge characteristics, the stability with respect to the negative electrode and the cycle characteristics of the non-aqueous electrolyte battery can easily reach a good range. In addition, the maximum content is usually 90% or less by volume, preferably 85% or less by volume, and more preferably 80% or less by volume. With this range, the oxidation/reduction resistance of the non-aqueous electrolyte can be improved, thus contributing to the improvement of the stability during high-temperature storage. The content of the chain carbonate is not particularly limited, but it is usually 15% or more by volume, preferably 20% or more by volume, and more preferably 25% or more by volume, relative to the total amount of the solvent in the non-aqueous electrolyte. In addition, the volume ratio is usually 90% or less, preferably 85% or less, and more preferably 80% or less. By setting the content of the chain carbonate in the above range, the viscosity of the non-aqueous electrolyte can be easily kept with an appropriate range, and the decrease of ionic conductivity can be suppressed, thus contributing to a good range of the output characteristics of the non-aqueous electrolyte battery. When two or more kinds of chain carbonates are used in combination, the total amount of the chain carbonate only needs to be in the above range.

In some embodiments, it is also preferable to use chain carbonates with fluorine atoms (hereinafter referred to as "fluorinated chain carbonates"). The number of fluorine atoms in the fluorinated chain carbonate is not particularly limited as long as it is 1 or more, but it is usually 6 or less, preferably 4 or less. When the fluorinated chain carbonate has multiple fluorine atoms, these fluorine atoms can be bonded to the same carbon or to different carbons. Examples of the fluorinated chain carbonates include fluorinated dimethyl carbonate derivatives, fluorinated ethyl methyl carbonate derivatives and fluorinated diethyl carbonate derivatives.

Carboxylic acid solvent includes cyclic carboxylic ester and/or chain carbonic ester. Examples of cyclic carboxylic ester include one or more of γ-butyrolactone, γ-valerolactone and δ-valerolactone. Examples of chain carbonic ester include one or more of methyl acetate (MA), ethyl acetate (EA), n-propyl acetate (EP), butyl acetate, propyl propionate (PP) and butyl propionate.

In some embodiments, sulfone solvent includes cyclic sulfones and chain sulfones, but preferably, in the case of cyclic sulfones, it is usually a compound with 3-6 carbon atoms, preferably 3-5 carbon atoms; and in the case of chain sulfones, it is usually a compound with 2-6 carbon atoms, preferably 2-5 carbon atoms. The addition amount of the sulfone solvent is not particularly limited, which is within the range of not significantly damaging the effect of the lithium ion battery of the present application. Compared with the total amount of solvent in non-aqueous electrolyte, the volume ratio is usually 0.3% or more, preferably 0.5% or more, more preferably 1% or more. Moreover, the volume ratio is usually 40% or less, preferably 35% or less, and more preferably 30% or less. When two or more kinds of sulfone solvent are used in combination, the total amount of the sulfone solvents only needs to meet the above range. When the addition amount of sulfone solvent is within the above range, the electrolyte with excellent high-temperature storage stability is easily to be obtained.

In a preferred embodiment, the solvent is a mixture of cyclic carbonic ester and chain carbonic ester.

In some embodiments, the lithium salt includes one or more of $LiPF_6$, $LiPO_2F_2$, $LiBF_4$, $LiSbF_6$, $LiAsF_6$, $LiN(SO_2CF_3)_2$, $LiN(SO_2C_2F_5)_2$, $LiC(SO_2CF_3)_3$, $LiN(SO_2F)_2$, $LiClO_4$, $LiAlCl_4$, $LiCF_3SO_3$ and lithium lower aliphatic carboxylate.

In a preferred embodiment, the lithium salt includes $LiPF_6$ and an auxiliary lithium salt, and the auxiliary lithium salt includes one or more of $LiPO_2F_2$, $LiSbF_6$, $LiAsF_6$, $LiN(SO_2CF_3)_2$, $LiN(SO_2C_2F_5)_2$, $LiC(SO_2CF_3)_3$, $LiN(SO_2F)_2$, $LiClO_4$, $LiAlCl_4$, $LiCF_3SO_3$ and lithium lower aliphatic carboxylate.

Under the above conditions, $LiPF_6$ is added to the non-aqueous electrolyte as the main lithium salt, which, when combined with the auxiliary lithium salt, can further improve the thermal shock resistance of the battery. It is speculated that the compound represented by formula II contained in the positive electrode is dissolved in the nonaqueous electrolyte in a small amount, which cooperates with the combination of the above lithium salt, improving the stability of the non-aqueous electrolyte and preventing its decomposition and gas generation.

In some embodiments, the concentration of the lithium salt in the non-aqueous electrolyte is 0.1mol/L-8mol/L. In a preferred embodiment, the concentration of the electrolyte salt in the non-aqueous electrolyte is 0.5mol/L-4mol/L. Specifically, the concentration of the lithium salt may be 0.5mol/L, 1mol/L, 1.5mol/L, 2mol/L, 2.5mol/L, 3mol/L, 3.5mol/L

and 4mol/L.

In some embodiments, in the non-aqueous electrolyte, the percentage mass content of $LiPF_6$ is 5%-20%, and the percentage mass content of the auxiliary lithium salt is 0.05%-5%.

In some embodiments, the additive further includes at least one of cyclic carbonate compound, unsaturated phosphate compound, borate compound and nitrile compounds;

Preferably, the content of the additive is 0.01%-30% based on the total mass of the non-aqueous electrolyte being 100%.

Preferably, the cyclic carbonate compound is selected from at least one of vinylene carbonate, vinylethylene carbonate, fluoroethylene carbonate or a compound represented by structural formula 2;

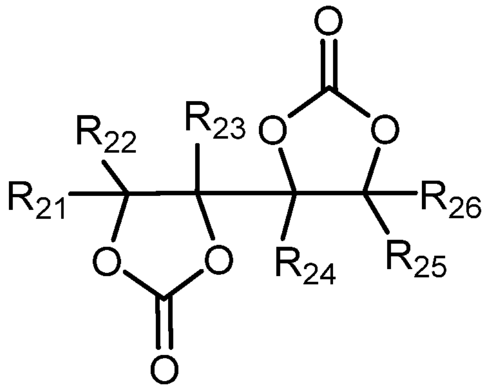

Structural formula 2

in structural formula 2, $R_{21}$, $R_{22}$, $R_{23}$, $R_{24}$, $R_{25}$ and $R_{26}$ are each independently selected from one of a hydrogen atom, a halogen atom and a C1-C5 group;

the unsaturated phosphate compound is selected from at least one of the compounds represented by structural formula 3:

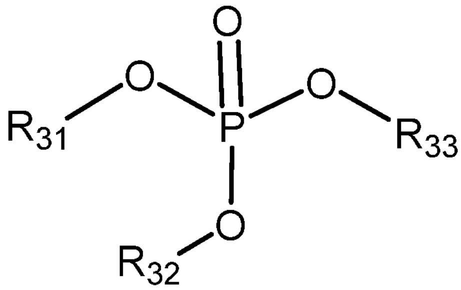

Structural formula 3

in structural formula 3, $R_{31}$, $R_{32}$ and $R_{33}$ are each independently selected from a C1-C5 saturated hydrocarbon group, an unsaturated hydrocarbon group, a halogenated hydrocarbon group and $-Si(C_mH_{2m+1})_3$, m is a natural number of 1-3, and at least one of $R_{31}$, $R_{32}$ and $R_{33}$ is an unsaturated hydrocarbon group.

In a preferred embodiment, the unsaturated phosphate compounds may be at least one selected from the group consisting of phosphoric acid tripropargyl ester, dipropargyl methyl phosphonate, dipropargyl ethyl phosphate, dipropargyl propyl phosphate,dipropargyl trifluoromethyl phosphate, dipropargyl-2, 2, 2-trifluoroethyl phosphate, dipropargyl-3, 3, 3-trifluoropropyl phosphate, dipropargyl hexafluoroisopropyl phosphate, phosphoric acid triallyl ester, diallyl methyl phosphate, diallyl ethyl phosphate, diallyl propyl phosphate, diallyl trifluoromethyl phosphate, diallyl-2 , 2 , 2-trifluoroethyl phosphate, diallyl-3, 3, 3-trifluoropropyl phosphate or diallyl hexafluoroisopropyl phosphate.

the borate compound is selected from at least one of tris (trimethylsilane) borate and tris (triethyl silicane) borate; and the nitrile compound is selected from one or more of butanedinitrile, glutaronitrile, ethylene glycol bis (propionitrile) ether, hexanetricarbonitrile, adiponitrile, pimelic dinitrile, hexamethylene dicyanide, azelaic dinitrile and sebaconitrile.

In other embodiments, the additive may also include other additives that can improve the performance of the battery. For example, additives that can improve the safety performance of the battery, flame retardant additives such as fluorophosphate and cyclophosphazene, or overcharge prevention additives such as tert.-amylbenzene and tert-butyl benzene.

It should be noted that, unless otherwise specified, in general, the content of any optional substance for the additive in the non-aqueous electrolyte is less than 10%, preferably 0.1-5%, and more preferably 0.1%-2%. Specifically, the content of any optional substance fro the additive may be 0.05%, 0.08%, 0.1%, 0.5%, 0.8%, 1%, 1.2%, 1.5%, 1.8%, 2%, 2.2%, 2.5%, 2.8%, 3%, 3.2%, 3.5%, 3.8%, 4%, 4.5%, 5%, 5.5%, 6%, 6.5%, 7%, 7.5%, 7.8%, 8%, 8.5%, 9%, 9.5% and 10%.

In some embodiments, when the additive is selected from fluoroethylene carbonate, the content of the fluoroethylene carbonate is 0.05%-30% based on the total mass of the non-aqueous electrolyte being 100%.

In some embodiments, the negative electrode plate includes a negative electrode material layer. The negative electrode material layer further includes a negative electrode active material selected from at least one of a silicon-based negative electrode, a carbon-based negative electrode, a lithium-based negative electrode and a tin-based negative electrode.

The silicon-based negative electrode includes one or more of silicon material, silicon oxide, silicon-carbon composite material and silicon alloy material. The carbon-based negative electrode includes one or more of graphite, hard carbon, soft carbon, graphene and mesocarbon microbeads. The lithium-based negative electrode includes one or more of metal lithium or lithium alloy. The lithium alloy may be at least one of lithium silicon alloy, lithium sodium alloy, lithium potassium alloy, lithium aluminum alloy, lithium tin alloy and lithium indium alloy. The tin-based negative electrode includes one or more of tin, tin carbon, tin oxide and tin metal compounds.

In some embodiments, the negative electrode material layer further includes a negative electrode binder and a negative electrode conductive agent. The negative electrode active material, the negative electrode binder and the negative electrode conductive agent are blended to obtain the negative electrode material layer.

The possible ranges of the negative electrode binder and the negative electrode conductive agent are the same as those of the positive electrode binder and the positive electrode conductive agent respectively, and the details are not repeated here.

In some embodiments, the negative electrode plate further includes a negative electrode current collector, and the negative electrode material layer is formed on the surface of the negative electrode current collector.

The negative current collector is selected from metal materials that can conduct electrons. Preferably, the negative current collector includes one or more of Al, Ni, tin, copper and stainless steel. In a more preferred embodiment, the negative current collector is selected from copper foil. The present application will be further illustrated with embodiments.

The compounds represented by structural formula 1 used in the following embodiments are shown in Table 1 below.

Table 1

| | | |
|---|---|---|
| 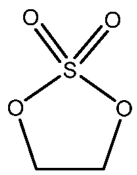 | 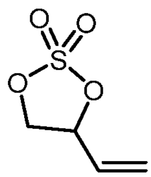 | 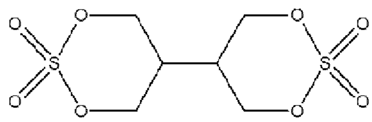 |
| Compound 1 | Compound 4 | Compound 6 |
| 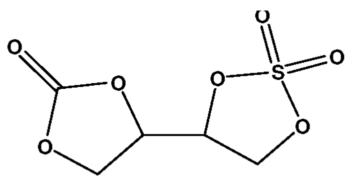 | 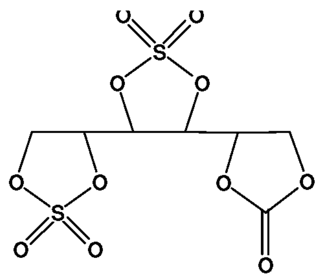 | 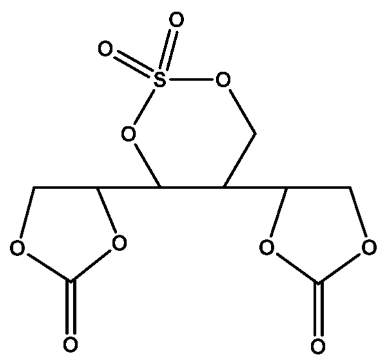 |

(continued)

| Compound 7 | Compound 12 | Compound 15 |
|---|---|---|

Table 2 Parameter Design of Embodiments and Comparative Examples

| Embodiments/Comparative Examples | Type of positive active material | Capacitance per unit area of the positive electrode material layer p/mAh/cm$^2$ | Separator porosity (q)/% | Non-aqueous electrolyte | | | q*m/p |
|---|---|---|---|---|---|---|---|
| | | | | Compound represented by structural formula 1 | Content of the compound represented by structural formula 1 m/% | Other additives and their content /% | |
| Embodiment 1 | $LiNi_{0.5}Mn_{0.3}Co_{0.2}O_2$ | 3.4 | 40 | Compound 1 | 0.5 | / | 5.88 |
| Embodiment 2 | $LiNi_{0.5}Mn_{0.3}Co_{0.2}O_2$ | 3.2 | 45 | Compound 1 | 0.3 | / | 4.22 |
| Embodiment 3 | $LiNi_{0.5}Mn_{0.3}Co_{0.2}O_2$ | 3 | 30 | Compound 1 | 0.1 | / | 1.00 |
| Embodiment 4 | $LiNi_{0.5}Mn_{0.3}Co_{0.2}O_2$ | 3.7 | 50 | Compound 1 | 1.1 | / | 14.86 |
| Embodiment 5 | $LiNi_{0.5}Mn_{0.3}Co_{0.2}O_2$ | 3.5 | 60 | Compound 1 | 0.01 | / | 0.17 |
| Embodiment 6 | $LiNi_{0.5}Mn_{0.3}Co_{0.2}O_2$ | 3.6 | 35 | Compound 1 | 2 | / | 19.44 |
| Embodiment 7 | $LiNi_{0.6}Mn_{0.2}Co_{0.2}O_2$ | 3.8 | 35 | Compound 1 | 0.4 | / | 3.68 |
| Embodiment 8 | $LiNi_{0.7}Mn_{0.2}Co_{0.1}O_2$ | 3.9 | 30 | Compound 1 | 0.8 | / | 6.15 |
| Embodiment 9 | $LiNi_{0.8}Mn_{0.1}Co_{0.1}O_2$ | 3.6 | 20 | Compound 1 | 0.1 | / | 0.56 |
| Embodiment 10 | $LiNi_{0.8}Mn_{0.1}Co_{0.1}O_2$ | 3.8 | 40 | Compound 1 | 0.5 | / | 5.26 |
| Embodiment 11 | $LiNi_{0.8}Mn_{0.1}Co_{0.1}O_2$ | 4 | 30 | Compound 1 | 1 | / | 7.50 |
| Embodiment 12 | $LiNi_{0.8}Mn_{0.1}Co_{0.1}O_2$ | 4.2 | 50 | Compound 1 | 0.05 | / | 0.60 |
| Embodiment 13 | $LiNi_{0.9}Mn_{0.05}Co_{0.05}O_2$ | 4.5 | 42 | Compound 1 | 0.1 | / | 0.93 |
| Embodiment 14 | $LiNi_{0.95}Mn_{0.03}Co_{0.02}O_2$ | 5 | 35 | Compound 1 | 1.5 | / | 10.50 |
| Embodiment 15 | $LiNi_{0.75}Mn_{0.25}O_2$ | 3.5 | 30 | Compound 1 | 0.3 | / | 2.57 |
| Embodiment 16 | $LiNi_{0.5}Mn_{1.5}O_4$ | 1.5 | 30 | Compound 1 | 0.8 | / | 16.00 |
| Embodiment 17 | $LiMn_2O_4$ | 2.3 | 35 | Compound 1 | 0.5 | / | 7.61 |
| Embodiment 18 | $LiMn_{0.6}Fe_{0.4}PO_4$ | 2.8 | 30 | Compound 1 | 0.3 | / | 3.21 |
| Embodiment 19 | $LiMn_{0.7}Fe_{0.3}PO_4$ | 2.5 | 40 | Compound 1 | 0.1 | / | 1.60 |
| Embodiment 20 | $LiMn_{0.5}Fe_{0.5}PO_4$ | 3 | 35 | Compound 1 | 1.2 | / | 14.00 |
| Embodiment 21 | $LiNi_{0.5}Mn_{0.3}Co_{0.2}O_2$ | 3.4 | 40 | Compound 1 | 0.5 | VC: 1 | 5.88 |
| Embodiment 22 | $LiNi_{0.5}Mn_{0.3}Co_{0.2}O_2$ | 3.4 | 40 | Compound 1 | 0.5 | PS: 1 | 5.88 |
| Embodiment 23 | $LiNi_{0.5}Mn_{0.3}Co_{0.2}O_2$ | 3.4 | 40 | Compound 1 | 0.5 | $LiPO_2F_2$: 1 | 5.88 |

(continued)

| Embodiments/Comparative Examples | Type of positive active material | Capacitance per unit area of the positive electrode material layer p/mAh/cm$^2$ | Separator porosity (q)/% | Non-aqueous electrolyte | | | q*m/p |
|---|---|---|---|---|---|---|---|
| | | | | Compound represented by structural formula 1 | Content of the compound represented by structural formula 1 m/% | Other additives and their content /% | |
| Embodiment 24 | $LiNi_{0.5}Mn_{0.3}Co_{0.2}O_2$ | 3.4 | 40 | Compound 1 | 0.5 | FEC:1 | 5.88 |
| Embodiment 25 | $LiNi_{0.5}Mn_{0.3}Co_{0.2}O_2$ | 3.4 | 40 | Compound 4 | 0.5 | / | 5.88 |
| Embodiment 26 | $LiNi_{0.5}Mn_{0.3}Co_{0.2}O_2$ | 3.4 | 40 | Compound 6 | 0.5 | / | 5.88 |
| Embodiment 27 | $LiNi_{0.5}Mn_{0.3}Co_{0.2}O_2$ | 3.4 | 40 | Compound 7 | 0.5 | / | 5.88 |
| Embodiment 28 | $LiNi_{0.5}Mn_{0.3}Co_{0.2}O_2$ | 3.4 | 40 | Compound 12 | 0.5 | / | 5.88 |
| Embodiment 29 | $LiNi_{0.5}Mn_{0.3}Co_{0.2}O_2$ | 3.4 | 40 | Compound 15 | 0.5 | / | 5.88 |
| Comparative Example 1 | $LiNi_{0.5}Mn_{0.3}Co_{0.2}O_2$ | 3.4 | 40 | / | / | / | / |
| Comparative Example 2 | $LiNi_{0.5}Mn_{0.3}Co_{0.2}O_2$ | 3.4 | 40 | / | / | VC: 1 | / |
| Comparative Example 3 | $LiNi_{0.5}Mn_{0.3}Co_{0.2}O_2$ | 3.4 | 40 | / | / | FEC:1 | / |
| Comparative Example 4 | $LiNi_{0.5}Mn_{0.3}Co_{0.2}O_2$ | 3.4 | 40 | / | / | $LiPO_2F_2$: 1 | / |
| Comparative Example 5 | $LiNi_{0.5}Mn_{0.3}Co_{0.2}O_2$ | 3.4 | 40 | / | / | PS: 1 | / |
| Comparative Example 6 | $LiNi_{0.6}Mn_{0.2}Co_{0.2}O_2$ | 3.7 | 30 | / | / | / | / |
| Comparative Example 7 | $LiNi_{0.7}Mn_{0.2}Co_{0.1}O_2$ | 3.9 | 35 | / | / | / | / |
| Comparative Example 8 | $LiNi_{0.8}Mn_{0.1}Co_{0.1}O_2$ | 4.2 | 30 | / | / | / | / |
| Comparative Example 9 | $LiNi_{0.9}Mn_{0.05}Co_{0.05}O_2$ | 4.4 | 45 | / | / | / | / |
| Comparative Example 10 | $LiNi_{0.75}Mn_{0.25}O_2$ | 3.4 | 25 | / | / | / | / |
| Comparative Example 11 | $LiNi_{0.5}Mn_{1.5}O_4$ | 3.2 | 50 | / | / | / | / |
| Comparative Example 12 | $LiMn_{0.6}Fe_{0.4}PO_4$ | 2.6 | 45 | / | / | / | / |
| Comparative Example 13 | $LiNi_{0.5}Mn_{0.3}Co_{0.2}O_2$ | 3.2 | 15 | Compound 1 | 0.5 | / | 2.34 |
| Comparative Example 14 | $LiNi_{0.5}Mn_{0.3}Co_{0.2}O_2$ | 3.6 | 30 | Compound 1 | 0.01 | / | 0.08 |
| Comparative Example 15 | $LiNi_{0.6}Mn_{0.2}Co_{0.2}O_2$ | 3.6 | 65 | Compound 1 | 0.1 | / | 1.81 |
| Comparative Example 16 | $LiNi_{0.7}Mn_{0.2}Co_{0.1}O_2$ | 3.8 | 30 | Compound 1 | 2.5 | / | 19.74 |
| Comparative Example 17 | $LiNi_{0.8}Mn_{0.1}Co_{0.1}O_2$ | 3.9 | 50 | Compound 1 | 1.6 | / | 20.51 |

(continued)

| Embodiments/Comparative Examples | Type of positive active material | Capacitance per unit area of the positive electrode material layer p/mAh/cm$^2$ | Separator porosity (q)/% | Non-aqueous electrolyte | | | q*m/p |
|---|---|---|---|---|---|---|---|
| | | | | Compound represented by structural formula 1 | Content of the compound represented by structural formula 1 m/% | Other additives and their content /% | |
| Comparative Example 18 | $LiNi_{0.95}Mn_{0.03}Co_{0.02}O_2$ | 5.2 | 40 | Compound 1 | 0.8 | / | 6.15 |
| Comparative Example 19 | $LiNi_{0.75}Mn_{0.25}O_2$ | 4 | 35 | Compound 1 | 0.01 | / | 0.09 |
| Comparative Example 20 | $LiNi_{0.5}Mn_{1.5}O_4$ | 1.8 | 50 | Compound 1 | 0.005 | / | 0.14 |
| Comparative Example 21 | $LiMn_2O_4$ | 1.2 | 45 | Compound 1 | 0.1 | / | 3.75 |
| Comparative Example 22 | $LiMn_{0.6}Fe_{0.4}PO_4$ | 2.2 | 20 | Compound 1 | 0.01 | / | 0.09 |
| Comparative Example 23 | $LiNi_{0.5}Mn_{0.3}Co_{0.2}O_2$ | 3.4 | 55 | Compound 1 | 1.5 | / | 24.26 |
| Comparative Example 24 | $LiNi_{0.5}Mn_{0.3}Co_{0.2}O_2$ | 3.6 | 45 | Compound 1 | 1.8 | / | 22.50 |

Embodiment 1

This embodiment is used to illustrate the lithium ion battery and its preparation method, including the following steps:

1) Preparation of positive electrode plate

Step 1: Add PVDF as a binder into NMP solvent, and fully stir to obtain PVDF glue solution.
Step 2: Add the conductive agent (super P+CNT) into the PVDF glue solution, and fully stir it evenly.
Step 3: Continue to add the positive electrode active material shown in Table 2, and fully stir evenly to finally obtain the desired positive electrode slurry.
Step 4: Evenly coat the prepared positive electrode slurry on the positive electrode current collector (such as aluminum foil), and obtain a positive electrode plate through drying, rolling, die cutting or slitting. The capacitance of the positive electrode plate is shown in Table 2.

2) Preparation of negative electrode plate

Step 1: weigh the materials according to the ratio of graphite (Shanghai Shanshan, FSN-1): conductive carbon (super P): sodium carboxymethyl cellulose (CMC): styrene-butadiene rubber (SBR) = 96.3: 1.0: 1.2: 1.5 (mass ratio).
Step 2: Firstly, add CMC into pure water according to the solid content of 1.5%, and fully stir evenly (for example, the stirring time is 120min) to prepare a transparent CMC glue solution.
Step 3: Add conductive carbon (super P) into the CMC glue solution, and fully and evenly stirr (for example, stirring time is 90min) to prepare a conductive adhesive.
Step 4: Continue to add graphite, fully and evenly stir, and finally obtain the desired negative electrode slurry.
Step 5: The prepared negative electrode slurry is evenly coated on the copper foil, and the negative electrode plate is obtained through drying, rolling, die cutting or slitting.

3) Preparation of non-aqueous electrolyte

Mix ethylene carbonate (EC), diethyl carbonate (DEC) and ethyl methyl carbonate (EMC) according to the mass ratio of EC: DEC: EMC = 1: 1: 1, and add additives with the percentage mass contents as shown in Table, and then add lithium hexafluorophosphate ($LiPF_6$) until the molar concentration is 1 mol/L.

4) Preparation of lithium ion battery core

Assemble the prepared positive electrode plate, the negative electrode plate and the separator with porosity as shown in Table 2 into a laminated flexible battery core.

5) Liquid injection and formation of battery core

In a glove box with dew point controlled below -40°C, inject the electrolyte prepared above into the battery core, and then it is packed and sealed in vacuum condition and let stand for 24 hours. Then follow the steps below to perform the formation: charging at 0.05C constant current for 180min, charging at 0.1C constant current for 120min, charging at 0.2C constant current for 120min, sealing in vaccum condition for the second time, then fully charging (100%SOC) at 0.2C current, and after standing at room temperature for 24 hours, fully discharging (0%SOC) at 0.2C current.

Embodiments 2-29

Embodiments 2-29 are used to illustrate the lithium ion battery and its preparation method disclosed in the present application, including most of the steps in Embodiment 1, with the difference that:
the positive electrode active material, positive electrode capacitance, electrolyte additive components and separator shown in Table 2 are adopted.

Comparative Examples 1-24

Comparative Examples 1-24 are used to illustrate the disclosed battery and its preparation method, including most of the steps in Embodiment 1, with the difference that:
the positive electrode active material, positive electrode capacitance, electrolyte additive components and separator

shown in Table 2 are adopted.

Performance test

The following performance tests were conducted on the lithium ion battery prepared above.

High-temperature cycle performance test:
at 45°C, the lithium ion batteries prepared in Embodiments and Comparative Examples were charged at 1C rate and discharged at 1C rate, and the full charge-discharge cycle test was performed within the range of charge-discharge cut-off voltage until the capacity of the lithium ion battery decayed to 80% of the initial capacity, and the number of cycles was recorded.

Test for manganese content on separator:
the 80% lithium ion battery whose capacity decayed to the initial capacity was fully discharged at 0.1C rate, and then the battery was disassembled and the separator was taken out, and the taken-out separator was immersed in an acid solution (for example, an aqueous nitric acid solution) for a preset time (for example, about 30 minutes). Therefore, the manganese on the separator is dissolved (eluted) in the acid solution, and this solution is detected by inductively coupled plasma emission spectrometer (ICP-OES), thus obtaining the manganese content (ppm) of the separator.

(1) Test results obtained from Embodiments 1-20 and Comparative Examples 1 and 6-24 are recorded in Table 3.

Table 3

| Embodiments/Comparative Examples | Initial battery capacity/mAh | Mn ion content of separator /ppm/$m^2$ | Number of cycles at 45°C |
|---|---|---|---|
| Embodiment 1 | 1200 | 103 | 1510 |
| Embodiment 2 | 1192 | 125 | 1501 |
| Embodiment 3 | 1181 | 142 | 1491 |
| Embodiment 4 | 1152 | 201 | 1451 |
| Embodiment 5 | 1145 | 222 | 1444 |
| Embodiment 6 | 1140 | 246 | 1435 |
| Embodiment 7 | 1249 | 263 | 1405 |
| Embodiment 8 | 1286 | 279 | 1386 |
| Embodiment 9 | 1320 | 369 | 1258 |
| Embodiment 10 | 1355 | 312 | 1312 |
| Embodiment 11 | 1348 | 326 | 1300 |
| Embodiment 12 | 1325 | 357 | 1265 |
| Embodiment 13 | 1385 | 401 | 1213 |
| Embodiment 14 | 1406 | 435 | 1192 |
| Embodiment 15 | 1275 | 288 | 1361 |
| Embodiment 16 | 998 | 686 | 986 |
| Embodiment 17 | 975 | 698 | 961 |
| Embodiment 18 | 1023 | 652 | 1021 |
| Embodiment 19 | 1010 | 668 | 1006 |
| Embodiment 20 | 985 | 698 | 963 |
| Comparative Example 1 | 923 | 625 | 1006 |
| Comparative Example 6 | 1070 | 435 | 1144 |
| Comparative Example 7 | 1112 | 469 | 1121 |
| Comparative Example 8 | 1150 | 536 | 1100 |

(continued)

| Embodiments/Comparative Examples | Initial battery capacity/mAh | Mn ion content of separator /ppm/$m^2$ | Number of cycles at 45°C |
|---|---|---|---|
| Comparative Example 9 | 1185 | 576 | 1079 |
| Comparative Example 10 | 1100 | 491 | 1112 |
| Comparative Example 11 | 925 | 852 | 859 |
| Comparative Example 12 | 939 | 834 | 872 |
| Comparative Example 13 | 985 | 2098 | 1121 |
| Comparative Example 14 | 961 | 2111 | 1100 |
| Comparative Example 15 | 994 | 2160 | 1079 |
| Comparative Example 16 | 1031 | 2191 | 1052 |
| Comparative Example 17 | 1072 | 2220 | 1031 |
| Comparative Example 18 | 1103 | 2262 | 1001 |
| Comparative Example 19 | 1019 | 2202 | 1060 |
| Comparative Example 20 | 853 | 2602 | 805 |
| Comparative Example 21 | 829 | 2712 | 786 |
| Comparative Example 22 | 864 | 2585 | 816 |
| Comparative Example 23 | 958 | 2120 | 1095 |
| Comparative Example 24 | 975 | 2105 | 1113 |

From the test results of Embodiments 1-20 and Comparative Examples 1, 6-24, it can be seen that there is a correlation between the porosity (q) of the separator, the percentage mass content (m) of the compound represented by structural formula 1 in the non-aqueous electrolyte and the capacitance per unit area (p) of the positive electrode material layer, which can improve the inhibition of $Mn^{2+}$ dissolution and the circulation of $Mn^{2+}$ between the positive electrode and positive electrode. When the porosity (q) of the separator, the percentage mass content (m) of the compound represented by structural formula 1 in the non-aqueous electrolyte and the capacitance per unit area (p) of the positive electrode material layer meet the condition of $0.1 \leq q*m/p \leq 20$, the obtained lithium ion battery has higher initial capacity and excellent high-temperature cycle performance, and the content of manganese ions in the separator is obviously reduced after cycling, which indicates that the adjustment and cooperation of the above parameters are conducive to the formation of a more stable interface film at the positive electrode interface and more obvious inhibition on the dissolution of manganese ions. This reduces the decomposition of electrolyte on the positive electrode interface, and the designed porosity of the separator can inhibit the mobility of manganese ions without affecting the movement of lithium ions, thus improving the cycle life and high temperature stability of lithium ion batteries on the premise of ensuring the energy density.

Especially, from the test results of Embodiments 1-20, it can be known that lithium ion batteries have the best overall electrochemical performance when they meet the condition of $1 \leq q*m/p \leq 10$.

From the test results of Comparative Examples 14, 19 and 22, it can be seen that even if the q value, m value and p value all meet the parameter range limits, the q*m/p value is too small, which will lead to the increase of manganese ion content on the separator after cycling and shorten the high-temperature cycle life of lithium ion batteries. From the test results of Comparative Examples 17, 23 and 24, it can be seen that too large q*m/p value is also not conducive to inhibiting the mobility of manganese ions between the positive and negative electrodes, resulting in the decline of battery cycle performance. It indicates that the porosity (q) of the separator, the percentage mass content (m) of the compound represented by structural formula 1 in the non-aqueous electrolyte and the capacitance per unit area (p) of the positive electrode material layer are influential with one another in inhibiting the movement between the positive electrode and the negative electrode of manganese ions. When and only when they reach a moderate state, the dissolution of manganese ions in the positive electrode and the intercalation in the negative electrode can be well suppressed. Furthermore, it is evident from the test results of Comparative Examples 13, 15, 18, 20, and 21 that even if q, m, and p values satisfy the condition $0.1 \leq q*m/p \leq 20$, the resulting lithium ion battery still performs poorly in high-temperature cycles when one of these values is outside the range of its parameters.

From the test results of Embodiments 12-20 and Comparative Examples 5-12, it can be seen that with the increase of manganese content in lithium manganese-based positive electrode active materials to a higher level, the

dissolution of manganese ions is intensified, which leads to the decrease of the stability of lithium manganese-based positive electrode active materials. At this point, the interfacial film formed by the compound represented by structural formula 1 is crucial to improve the stability of lithium manganese-based positive electrode active materials. However, toan excessive amount of the compound represented by structural formula 1 will also lead to the decrease of the initial capacity and the number of cycles of the battery. It is necessary to adjust the porosity of the separator and the capacitance per unit area of the positive electrode material to achieve a better overall battery performance.

(2) The test results obtained from Embodiments 1, 21-24 and Comparative Examples 2-5 are recorded in Table 4.

Table 4

| Embodiments/Comparati ve Examples | Initial battery capacity /mAh | Mn ion content of separator /ppm/$m^2$ | Number of cycles at 45°C |
|---|---|---|---|
| Embodiment 1 | 1200 | 103 | 1510 |
| Embodiment 21 | 1210 | 94 | 1518 |
| Embodiment 22 | 1220 | 76 | 1530 |
| Embodiment 23 | 1216 | 85 | 1529 |
| Embodiment 24 | 1226 | 70 | 1537 |
| Comparative Example 2 | 1021 | 379 | 1195 |
| Comparative Example 3 | 1051 | 324 | 1235 |
| Comparative Example 4 | 1034 | 356 | 1210 |
| Comparative Example 5 | 1043 | 340 | 1222 |

According to the test results of Embodiments 1 and Examples 21-24, in the battery system provided by the application, when additives VC (vinylene carbonate), PS(1,3-propane sultone), $LiPO_2F_2$ (lithium difluorophosphate ) or FEC (fluoroethylene carbonate) are added, the cycle performance of the battery can be further improved and the dissolution of manganese ions can be reduced. It is speculated that the compound represented by structural formula 1 and the above additives participated in the formation of the interfacial film on the surface of lithium manganese-based positive electrode active material, and an interfacial film with more excellent stability is obtained, thus effectively reducing the reaction of electrolyte on the electrode surface and improving the electrochemical performance of the battery. More preferably, among the above additives, it can be seen that the use of FEC combined with the compound represented by structural formula 1 in the electrolyte has the most obvious effect on improving the cycle performance of battery.

Referring to the test results of Embodiments 1 and Comparative Examples 2-5, when the compound represented by structural formula 1 is replaced by VC (vinylene carbonate), PS(1,3-propane sultone), $LiPO_2F_2$ (lithium difluorophosphate ) or FEC (fluoroethylene carbonate) in the electrolyte, the improvement of the battery is far less than that of adding the compound represented by structural formula 1 in the electrolyte. It is speculated that in the lithium manganese-based positive electrode active material system, the compound represented by structural formula 1 is more conducive to the film-forming reaction on the surface of the material, and the formed interface film is more firm and stable, so that the protective effect on the positive electrode material is better, resulting in a greater degree of cycle improvement of the lithium manganese-based battery system. In Comparative Example 5, although PS and the compound represented by structural formula 1 are both cyclic sulfur-based additives, the improvement degree is far less than that of the compound represented by structural formula 1. It is speculated that the lithium manganese-based positive electrode active material system is selective to such cyclic sulfur-based additives.

(3) The test results obtained fro Embodiments 1, 25-29 are recorded in Table 5.

Table 5

| Embodiments/Comparative Examples | Initial battery capacity /mAh | Mn ion content of separator /ppm/$m^2$ | Number of cycles at 45°C |
|---|---|---|---|
| Embodiment 1 | 1200 | 103 | 1510 |
| Embodiment 25 | 1198 | 106 | 1506 |
| Embodiment 26 | 1190 | 114 | 1496 |
| Embodiment 27 | 1195 | 109 | 1502 |
| Embodiment 28 | 1193 | 111 | 1500 |

(continued)

| Embodiments/Comparative Examples | Initial battery capacity /mAh | Mn ion content of separator /ppm/$m^2$ | Number of cycles at 45°C |
|---|---|---|---|
| Embodiment 29 | 1187 | 119 | 1490 |

Referring to the test results of Embodiments 1 and Examples 25-19, when the compounds represented by different structural formulas 1 are used as additives of non-aqueous electrolyte, the condition of relation $0.1 \leq q*m/p \leq 20$ is also satisfied. This indicates that the cyclic sulfate groups commonly contained in the compounds represented by structural formulas 1 play a decisive role in the formation of passive films on the positive electrode and positive electrode surfaces. The passivation film rich in element S generated by decomposition can effectively inhibit the dissolution of Mn ions and form a better protective effect on the positive electrode material layer. The relation provided by the application has universality for different compounds represented by structural formula 1, and has an improvement effect on the high-temperature cycle performance of lithium ion batteries.

The above are merely the preferred embodiments of this application, and are not intended to limit the application. Any modification, equivalent substitution and improvement made within the spirit and principle of this application shall be included in the protection scope of this application.

## Claims

**1.** A lithium ion battery, comprising a positive electrode, a negative electrode, a non-aqueous electrolyte and a separator, wherein the separator is positioned between the positive electrode and the negative electrode, the positive electrode comprises a positive electrode material layer, the positive electrode material layer comprises a lithium manganese-based positive electrode active material, the non-aqueous electrolyte comprises a non-aqueous organic solvent, a lithium salt and an additive, and the additive comprises a compound represented by structural formula 1:

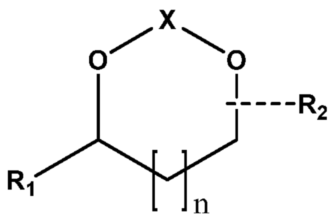

Structural formula 1

wherein n is 0 or 1, X is selected from

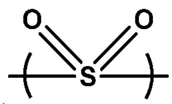 or 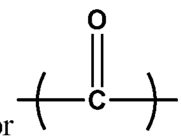,

$R_1$ and $R_2$ are each independently selected from H, a C1-C5 hydrocarbon group,

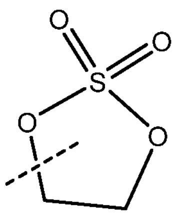, 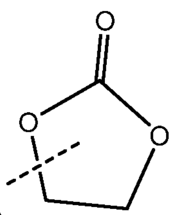 or 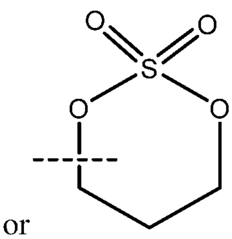,

and at least one of X, $R_1$, and $R_2$ comprises a sulfur atom.

the lithium ion battery meets the following requirements:

$$0.1 \leq q*m/p \leq 20;$$

$0.1 \leq q*m/p \leq 20$; and

$$20 \leq q \leq 60,\ 0.01 \leq m \leq 2,\ 1.5 \leq p \leq 5;$$

where q is a porosity of the separator, and the unit is %;
m is a percentage mass content of the compound represented by structural formula 1 in the non-aqueous electrolyte, and the unit is %; and
P is a capacitance per unit area of the positive electrode material layer, and the unit is $mAh/cm^2$.

**2.** The lithium ion battery of claim 1, wherein the lithium ion battery meets the following requirements:

$$1 \leq q*m/p \leq 10.$$

$1 \leq q*m/p \leq 10$.

**3.** The lithium ion battery of claim 1, wherein the porosity (q) of the separator is 30%-50%.

**4.** The lithium ion battery of claim 1, wherein the percentage mass content (m) of the compound represented by structural formula 1 in the non-aqueous electrolyte is 0.1%-1%.

**5.** The lithium ion battery of claim 1, wherein the capacitance per unit area (p) of the positive electrode material layer is 2-4 $mAh/cm^2$.

**6.** The lithium ion battery of claim 1, wherein the compound represented by structural formula 1 is selected from one or more of the following compounds:

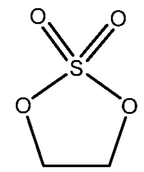

Compound 1

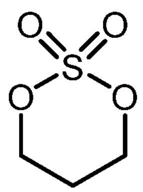

Compound 2

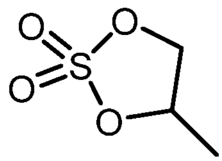

Compound 3

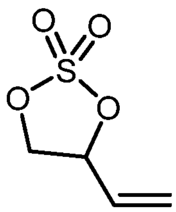

Compound 4

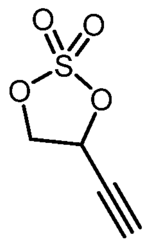

Compound 5

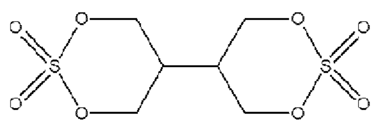

Compound 6

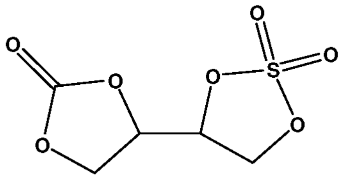

Compound 7

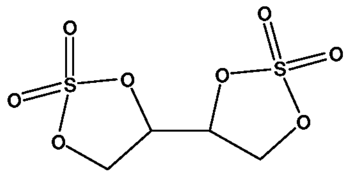

Compound 8

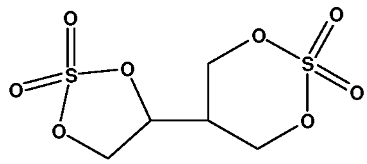

Compound 9

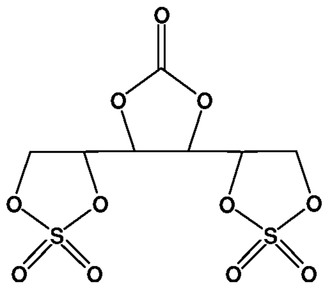

Compound 10

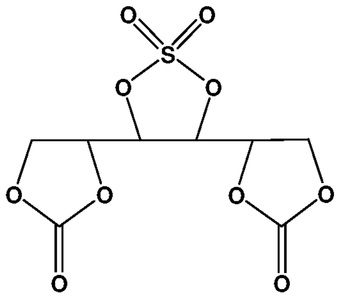

Compound 11

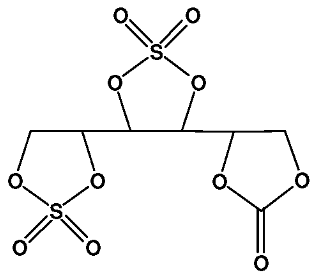

Compound 12

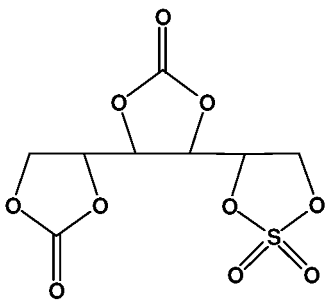

Compound 13

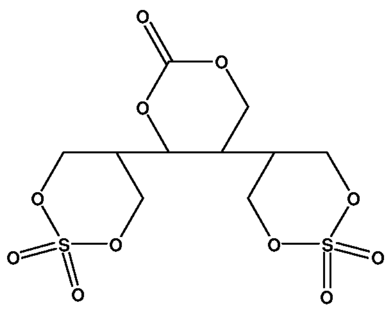

Compound 14

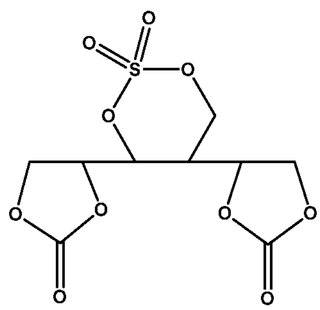

Compound 15

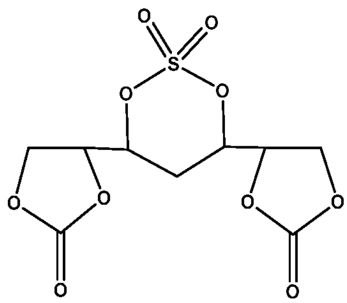

Compound 16

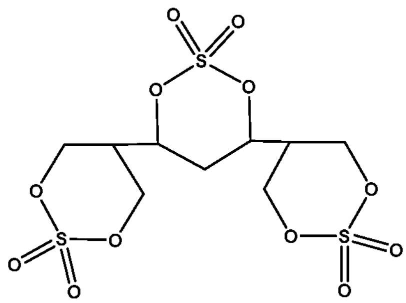

Compound 17

**7.** The lithium ion battery of claim 1, wherein the lithium manganese-based positive electrode active material comprises one or more compounds represented by formula (A), formula (B) and formula (C):

$Li_{1+x}Mn_aNi_bM_{1-a-b}O_{2-y}A_y$ Formula (A)

$Li_{1+}zMn_cN_{2-c}O_{4-d}B_d$ Formula (B)

$LiMn_qFe_{1-q}PO_4$ Formula (C)

in formula (A), $-0.1\leq x\leq 0.2$, $0<a<1$, $0\leq b<1$, $0<a+b<1$, $0\leq y<0.2$, M is one or more of Co, Fe, Cr, Ti, Zn, V, Al, Zr and Ce, and A comprises one or more of S, N, F, Cl, Br and I;
in formula (B), $-0.1\leq z\leq 0.2$, $0<c\leq 2$, $0\leq d<1$, N comprises one or more of Ni, Fe, Cr, Ti, Zn, V, Al, Mg, Zr and Ce, and B comprises one or more of S, N, F, Cl, Br and P; and
in formula (C), $0<q<1$.

**8.** The lithium ion battery of claim 1, wherein at least one surface of the separator is coated with a surface coating, and the surface coating comprises one or more of an inorganic particle and an organic gel.

**9.** The lithium ion battery of claim 1, wherein a content of manganese in the separator per unit area is 50 ppm/$m^2$-2000 ppm/$m^2$.

**10.** The lithium ion battery of claim 1, wherein the additive further comprises at least one of cyclic carbonate compound, unsaturated phosphate compound, borate compound and nitrile compound.

**11.** The lithium ion battery of claim 10, wherein the content of the additive is 0.01%-30% based on the total mass of the non-aqueous electrolyte being 100%.

**12.** The lithium ion battery of claim 10, wherein the cyclic carbonate compound is selected from at least one of vinylene carbonate, vinylethylene carbonate, fluoroethylene carbonate or a compound represented by structural formula 2;

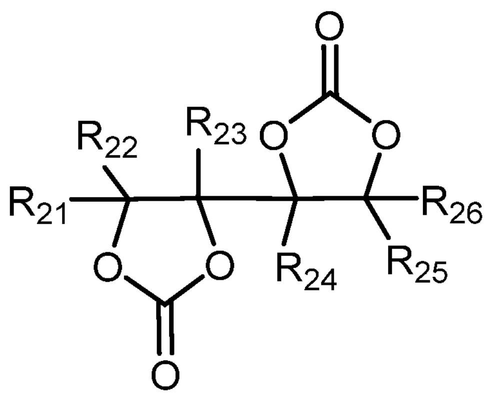

Structural formula 2

in structural formula 2, $R_{21}$, $R_{22}$, $R_{23}$, $R_{24}$, $R_{25}$ and $R_{26}$ are each independently selected from one of a hydrogen atom, a halogen atom and a C1-C5 group.

**13.** The lithium ion battery of claim 10, wherein the unsaturated phosphate compound is selected from at least one of the compounds represented by structural formula 3:

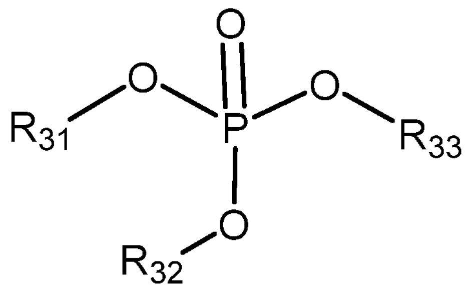

Structural formula 3

in structural formula 3, $R_{31}$, $R_{32}$ and $R_{33}$ are each independently selected from a C1-C5 saturated hydrocarbon group, an unsaturated hydrocarbon group, a halogenated hydrocarbon group and $-Si(C_mH_{2m+1})_3$, m is a natural number of 1-3, and at least one of $R_{31}$, $R_{32}$ and $R_{33}$ is an unsaturated hydrocarbon group.

**14.** The lithium ion battery of claim 10, wherein the borate compound is selected from at least one of tris (trimethylsilane) borate and tris (triethyl silicane) borate.

**15.** The lithium ion battery of claim 10, wherein the nitrile compound is selected from one or more of butanedinitrile, glutaronitrile, ethylene glycol bis (propionitrile) ether, hexanetricarbonitrile, adiponitrile, pimelic dinitrile, hexamethylene dicyanide, azelaic dinitrile and sebaconitrile.

## INTERNATIONAL SEARCH REPORT

International application No. **PCT/CN2023/098809**

**A. CLASSIFICATION OF SUBJECT MATTER**

H01M10/0567(2010.01)i；H01M10/0525(2010.01)i；H01M4/505(2010.01)i；H01M50/491(2021.01)i

According to International Patent Classification (IPC) or to both national classification and IPC

**B. FIELDS SEARCHED**

Minimum documentation searched (classification system followed by classification symbols)

IPC:H01M

Documentation searched other than minimum documentation to the extent that such documents are included in the fields searched

Electronic data base consulted during the international search (name of data base and, where practicable, search terms used)

CNTXT, WPABSC, ENTXTC, VEN, CNKI: 隔膜, 隔板, 隔离件, 隔离层, 隔离膜, 分隔, 孔隙率, 电解液, 含量, 硫酸, 酯, 面积, 容量, separater, porosity, electrolyte, content, sulphate, area, capacity

**C. DOCUMENTS CONSIDERED TO BE RELEVANT**

| Category* | Citation of document, with indication, where appropriate, of the relevant passages | Relevant to claim No. |
|---|---|---|
| PX | CN 115000515 A (SHENZHEN CAPCHEM TECHNOLOGY CO., LTD.) 02 September 2022 (2022-09-02)<br>description, paragraphs 7-42 | 1-15 |
| A | CN 110492105 A (DONGGUAN VEKEN BATTERY CO., LTD.) 22 November 2019 (2019-11-22)<br>description, paragraphs 9-128 | 1-15 |
| A | CN 110265625 A (NINGDE CONTEMPORARY AMPEREX TECHNOLOGY CO., LTD.) 20 September 2019 (2019-09-20)<br>entire document | 1-15 |
| A | CN 110800135 A (LG CHEMICAL LTD.) 14 February 2020 (2020-02-14)<br>entire document | 1-15 |
| A | CN 114447295 A (SHENZHEN CAPCHEM TECHNOLOGY CO., LTD.) 06 May 2022 (2022-05-06)<br>entire document | 1-15 |
| A | JP 2021163583 A (GS YUASA CORP.) 11 October 2021 (2021-10-11)<br>entire document | 1-15 |

☐ Further documents are listed in the continuation of Box C. ☑ See patent family annex.

* Special categories of cited documents:
- "A" document defining the general state of the art which is not considered to be of particular relevance
- "D" document cited by the applicant in the international application
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **30 August 2023** | **08 September 2023** |
| Name and mailing address of the ISA/CN<br>**China National Intellectual Property Administration (ISA/CN)**<br>**China No. 6, Xitucheng Road, Jimenqiao, Haidian District, Beijing 100088** | Authorized officer<br><br>Telephone No. |

Form PCT/ISA/210 (second sheet) (July 2022)

**INTERNATIONAL SEARCH REPORT**
**Information on patent family members**

International application No.
**PCT/CN2023/098809**

| Patent document cited in search report | | | Publication date (day/month/year) | Patent family member(s) | | | Publication date (day/month/year) |
|---|---|---|---|---|---|---|---|
| CN | 115000515 | A | 02 September 2022 | None | | | |
| CN | 110492105 | A | 22 November 2019 | None | | | |
| CN | 110265625 | A | 20 September 2019 | PL | 3651245 | T3 | 30 January 2023 |
| | | | | WO | 2020098571 | A1 | 22 May 2020 |
| | | | | US | 2020152964 | A1 | 14 May 2020 |
| | | | | US | 11355742 | B2 | 07 June 2022 |
| | | | | EP | 4123759 | A1 | 25 January 2023 |
| | | | | HUE | 060501 | T2 | 28 March 2023 |
| | | | | EP | 3651245 | A1 | 13 May 2020 |
| | | | | EP | 3651245 | B1 | 23 November 2022 |
| CN | 110800135 | A | 14 February 2020 | US | 2020136127 | A1 | 30 April 2020 |
| | | | | US | 11424441 | B2 | 23 August 2022 |
| | | | | KR | 20190004651 | A | 14 January 2019 |
| | | | | KR | 102160710 | B1 | 28 September 2020 |
| | | | | JP | 2020523772 | A | 06 August 2020 |
| | | | | JP | 6918224 | B2 | 11 August 2021 |
| | | | | EP | 3627593 | A1 | 25 March 2020 |
| | | | | EP | 3627593 | A4 | 17 June 2020 |
| CN | 114447295 | A | 06 May 2022 | None | | | |
| JP | 2021163583 | A | 11 October 2021 | None | | | |

Form PCT/ISA/210 (patent family annex) (July 2022)